# EUROPÄISCHE PATENTSCHRIFT

(11) **EP 2 494 243 B1**
(45) Veröffentlichungstag und Bekanntmachung des Hinweises auf die Patenterteilung: **24.07.2013**
(21) Anmeldenummer: 10750059.7
(22) Anmeldetag: 26.08.2010
(51) Int. Cl.: F16K 31/40

(54) **MAGNETVENTIL**
SOLENOID VALVE
ELECTROVANNE

(30) Priorität: 26.10.2009 DE 102009051573; 26.10.2009 DE 102009051574; 26.10.2009 DE 102009051572
(43) Veröffentlichungstag der Anmeldung: 05.09.2012
(73) Patentinhaber: Hydac Fluidtechnik GmbH, 66280 Sulzbach/Saar (DE)
(72) Erfinder: HILZENDEGEN, Philipp, 66123 Saarbrücken (DE); HELL, Franz-Rudolf, 66822 Lebach (DE)
(74) Vertreter: Bartels, Martin Erich Arthur
(86) Internationale Anmeldenummer: PCT/EP2010/005240
(87) Internationale Veröffentlichungsnummer: WO 2011/050878

(56) Entgegenhaltungen:
- EP-B1- 0 951 412
- WO-A1-2004/048831
- DE-A1-102008 020 855

## Beschreibung

Die Erfindung betrifft ein Magnetventil mit den Merkmalen im Oberbegriff von Anspruch 1.

Die DE-U-85 22 724 beschreibt ein Magnetventil mit einem ersten zylindrischen, aus einem ferromagnetischen Material gebildeten Gehäuseteil und einem zweiten, hülsenförmigen, gleichfalls aus einem ferromagnetischen Material bestehenden Gehäuseteil zur Aufnahme eines Magnetankers, der einen Ventilsitzkörper des Ventils ansteuert. Der Ventilsitzkörper weist hierfür mehrere Druckmittelanschlüsse auf, die in der Grundstellung des Magnetventils durch einen an dem Magnetanker angeordneten Betätigungsstößel hydraulisch voneinander getrennt sind. Die beiden Gehäuseteile selbst sind durch ein ringförmiges, weiteres Gehäuseteil aus einem nichtmagnetischen Werkstoff magnetisch voneinander getrennt. Das Magnetventil ist aus einer Vielzahl von Komponenten gebildet, die aus der Richtung beider axialer Enden des Magnetventils zusammenzufügen und zu montieren sind, so dass bei der Montage des Ventils regelmäßig Spannvorrichtungen und Zentriervorrichtungen oder dergleichen mehr an Montagehilfsmitteln eingewechselt werden müssen. Der Montageablauf des Magnetventils bedingt einen gewissen Zeitaufwand, der nicht minimiert werden kann.

Durch die EP 0 951 412 B2 ist ein gattungsgemäßes Magnetventil für die Ansteuerung von flüssigen und gasförmigen Arbeitsmedien als Fluid bekannt, wobei das dahingehende Magnetventil insbesondere für hydraulische Bremsanlagen für Kraftfahrzeuge einsetzbar ist. Das bekannte Magnetventil weist ein erstes, vorzugsweise zylindrisches Gehäuseteil auf, das von einer Magnetspule umgeben ist und eine Aufnahme für einen Magnetanker bildet. Die Aufnahme bildet eine Axialführung für den genannten Magnet-anker aus und ein Energiespeicher in Form einer Rückstellfeder beaufschlagt den Magnetanker zusammen mit einem an ihm angreifenden Ventilstößel, der als eine Art Ventilschließglied ausgebildet für ein Schließsen des Magnetventils auf einen Ventilsitz drückt, der mit entsprechenden Fluidanschlüssen innerhalb des Ventilkörpers zusammenwirkt. Koaxial zu dem ersten Gehäuseteil ist ein zweites Gehäuseteil angeordnet, das eine in Längserstreckung des Magnetventils verlaufende, zylindrische Ausnehmung aufweist, die mit den genannten Ventilanschlüssen in Verbindung steht und in der der Ventilsitz angeordnet ist. Das Gehäuse des Magnetventils ist zwar im wesentlichen einteilig ausgebildet, die Bauteile des Magnetventils, wie Magnetspule, Magnetanker, Ventilstößel und Ventilschließglied, sind aber aus verschiedenen Richtungen in das Gehäuse des Magnetventils einzubringen, so dass der Montageaufwand sich ähnlich darstellt wie bei dem vorstehend beschriebenen Magnetventil.

Die DE 10 2008 020 855 A1 offenbart ein Elektromagnetventil. Das Ventil weist zwei Schließkörper auf. Einer der Schließkörper ist zwischen dem Magnetkern und dem Magnetkörper in eine Längsbohrung des Magnetankers eingesetzt. Dieser Schließkörper ragt in Richtung des zweiten Schließkörpers aus dem Magnetanker heraus.

Ausgehend von dem genannten Stand der Technik liegt der Erfindung die Aufgabe zugrunde, ein einfach herzustellendes und zu montierendes Magnetventil der Fachwelt zur Verfügung zu stellen. Eine dahingehende Aufgabe löst ein Magnetventil mit den Merkmalen des Patentanspruches 1 in seiner Gesamtheit.

Das Ventilschließglied ist als Stufenkolben ausgebildet und über ein Schlie-βelement mit Spitze, das in einem Klemmsitz mit dem Magnetanker verbunden ist, axial beaufschlagt.

Das erfindungsgemäße Magnetventil für die Ansteuerung eines Fluids weist ein Magnetsystem auf, das ein erstes Gehäuseteil zumindest teilweise umfaßt, das eine nach innen weisende Führungsbahn aufweist, entlang der zumindest alle bewegbaren Ventilkomponenten, wie Ventilschließglied, Magnetanker, Not-Betätigungsstößel, in Hintereinanderfolge in das erste Gehäuseteil über deren Aufnahmeöffnung in einer Richtung einsetzbar sind, wobei nach deren Einsetzen die Aufnahmeöffnung des ersten Gehäuseteils mit einem zweiten Gehäuseteil verschließbar ist. Demgemäß kann die Montage des Magnetventils durch zunächst ein Einspannen oder anderweitiges Fixieren des ersten Gehäuseteils erfolgen und anschließend können alle weiteren Komponenten, die aufgrund ihrer Funktion in dem Magnetventil nicht aus einer anderen Montagerichtung eingebaut oder vormontiert werden müssen, aus einer einzigen Montagerichtung heraus in oder an das erste Gehäuseteil des Magnetventils ein- bzw. angebracht werden, das wiederum aufgrund seiner Ausgestaltung als Träger für die Magnetspule in Frage kommt.

Bei einer besonders bevorzugten Ausführungsform des erfindungsgemäßen Magnetventils ist vorgesehen, dass das erste Gehäuseteil eine nach außen weisende weitere Führungsbahn aufweist, entlang deren sich ein Betätigungsmagnet in derselben Richtung aufbringen läßt wie die bewegbaren Ventilkomponenten. Auf diese Art und Weise läßt sich das gesamte Magnetventil mit Magnetsystem an einer Montagevorrichtung ohne mehrfaches Entnehmen und Umsetzen eines seiner Gehäuseteile montieren. Dadurch ist eine wesentliche Zeitersparnis bei der Montage bewirkt und die angesprochenen inneren und äußeren Führungsbahnen des ersten Gehäuseteils erlauben ein zentriertes Ein- und Anbringen der sonstigen Ventilkomponenten. Zudem ist eine fehlerhafte Montage durch diese einfache Art des Zusammenbaues des Magnetventils nahezu auszuschließen.

Bei einer weiteren bevorzugten Ausführungsform des erfindungsgemäßen Magnetventils sind ein Teil der inneren Führungsbahn und die äußere Führungsbahn im wesentlichen parallel zueinander verlaufend durch ein Polrohr des ersten Gehäuseteils gebildet. Ferner ist vorgesehen, dass die innere Führungsbahn, gebildet durch das erste Gehäuseteil einen gestuften zylindrischen Verlauf hat, die sich vom Ventilschließglied ausgehend in Richtung des zweiten Gehäuseteils im Bereich des Magnetankers erweitert. Aufgrund dieser Ausgestaltung sind Führungsflächen und Axialanschläge gebildet für die ineinander zu fügenden Einzelventilteile des Ventils. Aufgrund der dahingehenden Ausgestaltung ist eine Verwechslungssicherheit beim Zusammenbau gegeben und zum anderen eine exakte reproduzierbare Position der Bauteile des Ventils zueinander gewährleistet, wobei geringstmögliche Toleranzreihungen erreicht sind.

Ferner ist es vorteilhaft, eine Federkammer für die-Rückstellfeder als Energiespeicher zur Beaufschlagung des Not-Betätigungsstößels derart zu bilden, dass die Rückstellfeder in derselben Montagerichtung wie die Magnetspule und die sonstigen genannten Bauteile des Magnetventils montiert werden können.

Das erste Gehäuseteil ist vorzugsweise in der Art einer dünnwandingen Hülse als Polrohr im Bereich der Axialführung für den Magnetanker gebildet, wobei die Hülse zudem über das zweite Gehäuseteil hinausragt. Dadurch, dass sich das erste Gehäuseteil im Überschneidungsbereich mit dem zweiten Gehäuseteil als dünnwandige Hülse darstellt, kann durch einen Umformvorgang, wie etwa durch Bördeln, das erste Gehäuseteil an dem zweiten Gehäuseteil festgelegt werden, ohne dass dabei die Drucksteifigkeit der Gesamtvorrichtung beeinträchtigt wäre. Das erste Gehäuseteil und das zweite Gehäuseteil sind in der Art einer Steckverbindung miteinander verbunden, bei der das erste Gehäuseteil das zweite Gehäuseteil, in axialer Betätigungsrichtung des Magnetventils gesehen, zumindest teilweise übergreift. Dergestalt läßt sich die äußere Führungsbahn für das Aufschieben des Magnetsystems sinnfällig über das weitere zweite Gehäuseteil, bezogen auf dessen Außenumfang, fortführen. Dabei ist die äußere Führungsbahn insoweit unterbrochen, als das erste Gehäuseteil mit seinem einen freien Ende, das in der Art eines Bördelrandes gebildet ist, in eine Umfangsnut in das zweite Gehäuseteil festlegend eingreift. Dergestalt ist in diesem Bereich eine Art Formschlußverbindung gebildet.

Eine manuelle Öffnungsmöglichkeit des Magnetventils in einer Art Notbetrieb bei einer Fehlfunktion, etwa bedingt durch ein Versagen der Magnetspule, ist dadurch gegeben, dass in dem zweiten Gehäuseteil ein Fortsatz des Betätigungsstößels axial verschiebbar gelagert ist, der mittels einer im zweiten Gehäuseteil drehbar geführten Stellschraube von außen her betätigt werden kann. Der Fortsatz selbst ist an seinem einen freien Ende mit einer radialen Aufweitung versehen und dergestalt axial unverschiebbar in der genannten Stellschraube fixiert. Jedoch kann beim Drehen der Stell- oder Betätigungsschraube von Hand der Not-Betätigungsstößel den Magnetanker bewegen und insoweit die mit dem Anker verbundene Spitze als Schließelement von dem Ventilschließglied abgehoben werden. Auch bei einem festsitzenden Magnetanker ist somit eine Freigabe des Ventilschließgliedes im Bedarfsfall ohne weiteres möglich, sobald nach einem Leerhub der stangenartige Not-Betätigungsstößel mit seinem aufgeweiteten Ende den Magnetanker erfasst. Das Schließelement selbst kann im Anker über ein gewisses radiales Spiel verfügen, so dass der Schließkegel mit seiner Spitze auch bei fertigungsbedingten Fluchtungsfehler einwandfrei mittig auf den Pilotsitz am Ventilschließglied trifft. Auch die Stellschraube ist in derselben Montagerichtung entlang den genannten Führungsbahnen, wie die Magnetspule des Magnetsystems oder die zuvor genannten Bauteile des Magnetventils, an dem zweiten Gehäuseteil anbringbar. Das genannte Schließelement ist mit seiner Spitze in den Magnetanker an dessen freier Stirnseite eingesetzt und wird dort mittels eines Stahlringes und einer Bördelung gehalten.

Die Zuordnung der Ventilanschlüsse und die Ausformung des Ventilschließgliedes lassen sich derart gestalten, dass das Magnetventil in beiden Richtungen durchströmbar ist. Der an einem freien Ende des ersten Gehäuseteils gebildete Ventilkörper bildet einen Axialanschlag aus für das in der genannten Montagerichtung axial in diesem geführte Ventilschließglied.

Bei einer vorteilhaften Ausbildung des Magnetventils ist das erste Gehäuseteil mit einer Wandreduzierung versehen, die nach innen in Richtung des Magnetankers und des zweiten Gehäuseteils weist und die zumindest teilweise eine magnetische Trennung der beiden Gehäuseteile voneinander bewirkt. Die Wandreduzierung läßt sich in einfacher Weise fertigungstechnisch erhalten, beispielsweise unter Einsatz eines Rollier-oder Preßwerkzeuges, und insbesondere kommt die erfindungsgemäße Lösung ohne das Einbringen von Zusatzwerkstoffen aus, um einen magnetischen Kurzschluß vermeiden zu helfen und zur Effizienzerhöhung des magnetischen Systems die magnetische Trennung bewirken zu können. Die Wandreduzierung läßt sich auch über ein spanendes Formgebungsverfahren erhalten. Trotz der Wandreduzierung wird die innere Führungsbahn von ihrem Führungsverhalten her nicht gestört und beeinträchtigt insoweit nicht die vorstehend angesprochenen Montagevorgänge.

Aufgrund der von innen eingebrachten Vertiefungen, die die Wandreduzierung des ersten Gehäuseteils bilden, ist insoweit das Material der Wand des Gehäuseteils verdichtet, so dass auch bei höheren Druckbeanspruchungen ein sicherer Gegenhalt durch die angesprochene Wandverdichtung erreicht ist. Sofern im Sinne der vorliegenden Erfindung, also von Wandreduzierung die Rede ist, bringt dies zum Ausdruck, dass geometrisch gesehen eine Ausnehmung auf der Innenseite der Gehäuseteilwand vorhanden ist; jedoch keine Schwächung des Materials im Sinne einer fehlenden Drucksteifigkeit anzunehmen ist. Es ist für einen Durchschnittsfachmann auf dem Gebiet der Magnetventiltechnik überraschend, dass er mit einer Wandreduzierung eine sichere magnetische Trennung erreicht und dennoch durch die Verdichtung des verbleibenden Wandsrärkenmaterials einen wirksamen Druck-Gegenhalt erzeugt, so dass selbst im Versagensfall des Magnetventils hohe Drücke, bezogen auf den Fluid- oder Medienstrom, sicher von Teilen des Magnetgehäuses noch aufnehmbar sind.

Es ist zweckmäßig, die Montagerichtung der genannten Bauteile des Magnetventils derart zu wählen, dass die Bauteile bezogen auf den Ventilkörper und dessen Ventilanschlüsse konstruktiv aufeinander abgestimmt sind. Dazu kann in vorteilhafter Weise vorgesehen sein, die Montage mit dem Einspannen des ersten Gehäuseteils an dem Ventilkörper zu beginnen und mit dem Einfügen des Ventilschließgliedes fortzufahren. Einen gewissen Abschluß der Montagearbeiten kann durch das Aufschieben der Magnetspule als Teil des Magnetsystems auf das erste Gehäuseteil bis an einen Axialanschlag erfolgen, gebildet durch eine Stufe der äußeren Führungsbahn dieses ersten Gehäuseteils.

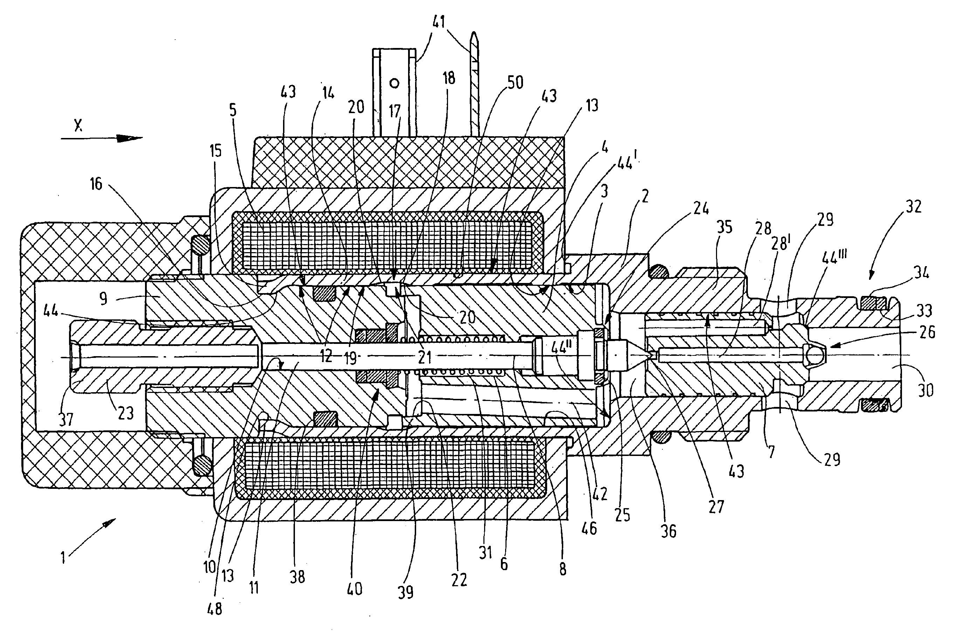

Nachstehend ist die Erfindung anhand eines in der Zeichnung dargestellten Ausführungsbeispiels im einzelnen erläutert.

Es zeigt die einzige Figur einen schematischen, nicht maßstäblichen Längsschnitt durch ein erfindungsgemäßes Magnetventil.

In der Figur ist in einem Längsschnitt ein Magnetventil 1 zur Steuerung eines Fluids, wie etwa einem flüssigen hydraulischen Arbeitsmittel, für einen nicht näher dargestellten hydraulischen Verbraucher einer hydraulischen Anlage gezeigt. Das Magnetventil 1 ist als elektromagnetisch betätigbares, vorgesteuertes Ventil ausgeführt. Das Magnetventil 1 besteht in seinen wesentlichen Teilen aus einem zylindrischen ersten Gehäuseteil 2 mit sich entlang seines Außen- und Innendurchmessers in Stufen verändernden Abmessungen.

Das erste Gehäuseteil 2 bildet mit seinem, am rechten Rand der Figur gezeigten Anschlußstutzen 32 mit einem in eine Umfangsnut 33 eingelegten O-Ring eine fluidführende Verbindungsmöglichkeit zu einer nicht näher gezeigten hydraulischen Anlage aus, insbesondere in Form eines hydraulischen Verbrauchers. Der Anschlußstutzen 32 ist Teil eines Ventilkörpers 35, in dessen Axialbereich das erste Gehäuseteil 2 eine große Wandstärke im Vergleich zu seinen übrigen Wandbereichen aufweist. Insoweit bildet der Anschlußstutzen 32 eine Art Cartridge-Ventil aus. Ein radial, in dem Ventilkörper 35 von beiden Seiten her eingebrachter Ventilanschluß 29 ist mit einem zentral und axial aus dem Anschlußstutzen 32 herausgeführten Ventilanschluß 30 verbindbar, wobei ein Ventilschließglied 7, in der Art eines Ventilkolbens ausgebildet, diese fluidführende Verbindung ansteuert. Das Ventilschließglied 7 ist als Stufenkolben ausgebildet und über ein Schließelement mit Spitze 27, die in einem Klemmsitz 24 mit einem Magnetanker 4 verbunden ist, axial beaufschlagt. Das Ventilschließglied 7 bildet einen ersten Bestandteil des Magnetventils 1 aus, in Bezug auf die Montage des Magnetventils, welches in einer Montagerichtung X, von der in Draufsicht auf die Figur gesehen linken Seite des Magnetventils 1 aus nach rechts in Richtung auf den Ventilkörper 35 zu definiert ist. Der Klemmsitz 24 ist dadurch bewirkt, dass ein Dichtmittel 25 in der Art eines O-Ringes aus Stahlwerkstoff in einer entsprechenden Aufnahme am Schließelement 27 und an dem Magnetanker 4 festliegt. Das Ventilschließglied 7 bildet mit seinem, in der Figur gezeigten rechten Rand einen Ventilsitz aus zusammen mit der Bohrung, die den Ventilanschluß 30 darstellt.

Das Schließelement 27 liegt mit seiner Spitze 27 in einer Bypass-Bohrung 28 in dem Ventilschließglied 7 mit seinem rechten freien Ende auf. Eine zweite Bypass-Bohrung 28', die radial mit Abstand zu der zentral, das Ventilschließglied 7 durchragenden Bypass-Bohrung 28 und parallel zu dieser angeordnet das Ventilschließglied 7 durchgreift, ist fluidführend mit dem Ventilanschluß 29 verbunden, und zwar über eine entsprechende Drosselstelle. Ebenso ist die Bypass-Bohrung 28 über eine Drosselstelle mit einem rückseitigen Druckraum 36 in Verbindung, wobei in die dahingehende Drosselstelle die Spitze 27 des Schließelementes in der in der Figur gezeigten Grundstellung eingreift. Insoweit bildet also die Bypass-Bohrung 28' bei entfernter Stößelspitze 27 eine fluidführende Verbindung zu dem rückseitigen Druckraum 36 aus, der sich zwischen dem Magnetanker 4 und der zugewandten Stirnseite des Ventilschließgliedes 7 erstreckt.

Ein Rückschlagventil 26 ist an dem, dem Ventilanschluß 30 zugewandten Ende des Ventilschließgliedes 7 angeordnet. In_Blickrichtung auf die Figur gesehen, geht links von dem Ventilkörper 35 das erste Gehäuseteil 2 in eine dünnwandige Hülse 14 über, die innerhalb des Magnetventils 1 das sog. Polrohr ausbildet. Ferner bildet die Hülse 14 eine Axialführung 3 für den Magnetanker 4 aus, und zwar über eine Länge, die etwa der Hälfte ihrer Gesamtlänge entspricht. Der Magnetanker ist in gleicher Montagerichtung X wie das Ventilschließglied 7 in der Hülse 14 geführt. Zwischen dem Magnetanker 4 und der Hülse 14 kann ein Gleit- oder Dichtmedium eingebracht sein, oder Teile der Innengehäusewandung der Hülse 14 sind im Außendurchmesser gegenüber den sonstigen Wandteilen etwas im Durchmesser verbreitert, so dass abgesetzte Schmiertaschen entstehen, in denen das Fluid dann eine Art Gleitdichtung für den Magnetanker 4 ausbildet.

Der kolbenartige Magnetanker 4 wird von dem Not-Betätigungsstößel 8 teilweise durchragt und kann in Abhängigkeit von der Bestromung einer die Hülse 14 in ihrer wesentlichen Länge umschließenden Magnetspule 5 verfahren werden. Der Stößel 8 ist mit einem Fortsatz 11 durch eine Ausnehmung 10 eines zweiten Gehäuseteils 9 geführt, an dessen freiem Endbereich sich eine Stellschraube 23 anschließt, die über eine entsprechende Innenschraubverbindung im zweiten Gehäuseteil 9 drehbar geführt ist. Die Stellschraube 23 ist in Montagerichtung X gesehen in das zweite Gehäuseteil 9 eingeschraubt. Beim Drehen an einem Kopf 37 mit einer Rändelung läßt sich der Stößel 8 einmalig betätigen und nimmt dabei den Anker 4 mit, so dass das Schließelement 27 das Ventilschließglied 7 im Sinne einer Öffnen-Position frei gibt. Für die dahingehende Notfunktion ist eine äußere Abdeckkappe von den sonstigen Magnetgehäuseteilen abzuziehen oder abzuschrauben.

Das in gleicher Montagerichtung X wie das Ventilschließglied 7 und der Magnetanker 4 in das erste Gehäuseteil 2 geführte zweite Gehäuseteil 9 ist im wesentlichen wie das erste Gehäuseteil 2 ein zylindrischer, einstückiger Körper mit entsprechenden Durchmesseranpassungen entlang seiner Au-βenseite. Das zweite Gehäuseteil 9 ist von der Hülse 14 des ersten Gehäuseteils 2 etwa bis zur Hälfte der axialen Erstreckung, eine Steckverbindung 12 bildend, umschlossen, wobei das zweite Gehäuseteil 9 eine Umfangsnut 16 aufweist, in die ein Rand 15 der Hülse 14 eingebördelt ist. Der Umfangsbereich 13 der Hülse 14 stellt sich im Längsschnitt als Kröpfung dar, d.h. der Rand 15 kommt nach der Umformung parallel versetzt in der Umfangsnut 16 zu liegen. Der Rand 15 stellt einen Axialanschlag 44 für das zweite Gehäuseteil 9 bei dessen Montage dar. Auch der dahingehende Einformvorgang kann mit einem Preß- oder Rollierwerkzeug oder in spanender Weise vonstatten gehen. Ferner ist ein O-Ring 38 zwischen der Hülse 14 und dem zweiten Gehäuseteil 9 in einer Nut des zweiten Gehäuseteils 9 angeordnet und dichtet dergestalt das erste Gehäuseteil 2 gegen das zweite Gehäuseteil 9 ab.

Zur magnetischen Trennung der beiden Gehäuseteile 2,9 in der axialen Mitte der Magnetspule 5 ist die Hülse 14 mit einer Wandreduzierung 17 auf etwa die Hälfte der sonstigen Wandstärke der Hülse 14 gebracht. Die Wandreduzierung 17 ist durch eine Nut 18 mit flach auslaufenden Flanken 20 am Innenumfang 19 der Hülse 14 gebildet. Ferner umgreift die Wandreduzierung 17 ringartig den Innenbereich der Hü!se 14. Durch die Wandreduzierung 17 ist die magnetische Trennung insbesondere zwischen den beiden Gehäuseteilen 2,9 erreicht und befindet sich der Magnetanker 14 in seiner in der Figur gezeigten vorderen Position, ist zwischen einem ringartigen Ende 39 des Magnetankers 4 und einem benachbarten, zugeordneten stufenförmigen Absatz an einer zu dem Magnetanker 4 benachbarten Seite des zweiten Gehäuseteils 9 eine Art Leerraum geschaffen, der zum einen die magnetische Trennung weiter begünstigt und zum anderen eine verbesserte Kraftlinieneinleitung von der Magnetspule 5 ausgehend in den Magnetanker 4 erlaubt. Sofern hier von Leerraum die Rede ist, kann dieser im Betrieb des Magnetventils mit Fluid befüllt werden, wobei überschüssiges Fluid beim Betätigen des Magnetankers 4 auch wieder abgeführt werden kann. Durch die genannte Art der Herstellung der magnetischen Trennung der beiden Gehäuseteile 2,9 voneinander entsteht keinerlei thermische Belastung, was ansonsten der Fall ist, beispielsweise wenn bei bekannten Auftragsschweißverfahren ein nicht-magnetischer Werkstoff auf das Polrohr aufgebracht wird.

Eine radiale Führung des Magnetankers 4 in dem Bereich der Wandreduzierung 17 ist dadurch gegeben, dass neben der sonstigen Führung über das erste Gehäuseteil 2 der Anker 4 mit seinem ringartigen Ende 39 in jeder Verfahrstellung entlang des stufenartigen Absatzes in dem zweiten Gehäuseteil 9 innerhalb des in sich insoweit ändernden Überschneidungsbereiches 21 geführt ist. Dergestalt ist im Überschneidungsbereich 21 eine Art Kolben-Zylinder-Anordnung realisiert, die zentrierend auf den Magnetanker 4 wirkt, so dass dieser stets an dem zweiten Gehäuseteil 9 abstützend an seinem linken freien Ende geführt ist. Ferner bestimmt die Relativbewegung der Kolben-Zylinder-Anordnung das Volumen des Leerraums.

In einer zylindrischen Bohrung der Ausnehmung 34, die von dem Ende 39 des Magnetankers 4, das dem zweiten Gehäusetei 19 zugewandt ist, sich erstreckt, ist eine Rückstellfeder 6 als Energiespeicher um den Not-Betätigungsstößel 8 herumgelegt. Die Rückstellfeder 6 ist in Montagerichtung X in die Ausnehmung 34 gelegt und um den Stößel 8 geführt. Die Rückstellfeder 6 stützt sich an einer Dichtungsanordnung 40 um den Stö-βelfortsatz 11 ab. Die Dichtungsanordnung 40 ist in der Art einer Stoffbuchsenpackung um den Fortsatz 11 gelegt und dichtet den Stößel 8 wiederum zur Vermeidung eines Druckmittelverlustes gegenüber dem zweiten Gehäuseteil 9 ab. Druckmittel kann dabei in den Zwischenraum zwischen dem Magnetanker 4 und dem zweiten Gehäuseteil 9, der den Leerraum ausbildet, anstehen, das über eine Längsbohrung 42 im Magnetanker 4 diesen von seiner hinteren Stirnseite zur vorderen Stirnseite in Richtung des Druckraumes 36 und umgekehrt durchqueren kann. Dergestalt ist ein Druckmittelausgleich gegeben, so dass sich im Bereich des Magnetankers 4 weder ein Überdruck noch ein Unterdruck aufbauen kann, der ansonsten zu Hemmnissen im Betrieb des Magnetankers 4 führen könnte. Das Magnetventil 1 weist ferner ein abschirmendes Gehäuse auf, insbesondere um seine Magnetspule 5 herum, wobei hier einschlägige Kunststoff- und Elastomermaterialien zum Einsatz kommen. Der dahingehende Magnetaufbau ist für Magnetventile üblich, so dass an dieser Stelle hierauf nicht mehr näher eingegangen wird.

Die Magnetspule 5 ist mit ihrem Gehäuse auf der Außenseite der Hülse 14 aufgeschoben, die insofern eine Führungsfläche 43 für die Magnetspule 5 bei deren Montage in Montagerichtung X bildet, und liegt an einem Bund- oder Axialanschlag 44' im Bereich des Überganges von der Hülse 14 zu dem Ventilkörper 35 an. Zur Bestromung der Magnetspule 5 dient ein an der oberen Seitenwand des Ventilgehäuses angebrachter Stecker 41 zur Anbindung an eine nicht näher dargestellte Steuer- und Stromversorgungseinheit.

Der Ventilkörper 35 des Magnetventils 1 ist sowohl von dem Ventilanschluß 29 zu dem Ventilanschluß 30 als auch umgekehrt durchströmbar. Im bestromten Zustand der Magnetspule 5 sind der Magnetanker 4 mit Spitze 27, der Stößel 8, 11 sowie das Ventilschließglied 7 in Blickrichtung auf die Figur gesehen nach links entgegen der Rückstellkraft der Rückstellfeder 6 bewegt, wobei dann eine Durchströmung des Venilkörpers 35 in beiden Richtungen zwischen den Ventilanschlüssen 29 und 30 möglich ist.

Im unbestromten Zustand des Magnetventils 1 hingegen ist eine Druckmittelströmung vom Ventilanschluß 29 zum Ventilanschluß 30 verhindert; jedoch besteht umgekehrt die Möglichkeit der Fluidverbindung zwischen dem Ventilanschluß 30 und dem Ventilanschluß 29. Für die dahingehende Durchströmungsrichtung vom Anschluß 30 zu dem Anschluß 29 muß jedoch der Ventilkolben 7 entgegen der Kraft der Rückstellfeder 6 verschoben werden, was beispielsweise bei einer Druckdifferenz von ca. 1,5 bar (Rückschlagfunktion) erfolgt. Wie dargelegt, ist hierbei die Magnetspule 5 unbestromt. Mit der erfindungsgemäßen Lösung ist mithin eine Art 2/2-WegeSitzventil realisiert, das magnetbetätigt und vorgesteuert als ein Schraubventil Drücke von durchaus 350 bar beherrschen kann, das im normalen Zustand geschlossen ist und, wie dargelegt, eine Rückschlag- oder Reverse-Flow-Funktion erlaubt.

Zusammenfassend bleibt festzuhalten, dass bei der erfindungsgemäßen Magnetventillösung das erste Gehäuseteil 2 eine nach innen weisende Führungsbahn 46 aufweist, entlang der zumindest alle bewegbaren Ventilkomponenten, wie Ventilschließglied 7, Magnetanker 4 sowie Not-Betätigungsstößel 8, in Hintereinanderfolge in das erste Gehäuseteil 2 über deren Aufnahmeöffnung 48 in der einen Montagerichtung X einsetzbar sind. Ferner weist das erste Gehäuseteil 2 eine nach außen weisende weitere Führungsbahn 50 auf, entlang der in der Montagerichtung X gesehen das Magnetsystem mit der Magnetspule 5 aufbringbar ist. Wie sich aus der Figur entnehmen läßt, verlaufen die innere Führungsbahn 46 und die äußere Führungsbahn 50 parallel zueinander. Ferner hat sowohl die innere Führungsbahn 46 als auch die äußere Führungsbahn 50 einen gestuften Verlauf, um dergestalt einen weiteren Axialanschlag 44" für den Magnetanker 4 auszubilden sowie einen Ventilsitz als Anschlag 44"' für das Ventilschließglied 7. Ferner ist die innere Führungsbahn 46 im Bereich des Überganges von Magnetanker 4 zu dem zweiten Gehäuseteil 9 unter Bildung der beschriebenen magnetischen Trennung unter Bildung einer Stufe ausgebildet und insoweit unterbrochen, was für die beschriebenen Einrichtungsmontagevorgänge aber unschädlich ist.

## Patentansprüche

1. Magnetventil für die Ansteuerung eines Fluids mit einem Magnetsystem, das ein erstes Gehäuseteil (2) zumindest teilweise umfaßt, das eine nach innen weisende Führungsbahn (46) aufweist, entlang der zumindest alle bewegbaren Ventilkomponenten, wie ein Ventilschließglied (7), ein Magnetanker (4), ein Not-Betätigungsstößel (8), in Hintereinanderfolge in das erste Gehäuseteil (2) über deren Aufnahmeöffnung (48) in einer Montagerichtung (X) einsetzbar sind, und dass nach deren Einsetzen die Aufnahmeöffnung (48) des ersten Gehäuseteils (2) mit einem zweiten Gehäuseteil (9) verschließbar ist, **dadurch gekennzeichnet, dass** das Ventilschließglied (7) als Stufenkolben ausgebildet ist und über ein Schließelement mit Spitze (27), das in einem Klemmsitz (24) mit dem Magnetanker (4) verbunden ist, axial beaufschlagt ist.

2. Magnetventil nach Anspruch 1, **dadurch gekennzeichnet, dass** das erste Gehäuseteil (2) eine nach außen weisende weitere Führungsbahn (50) aufweist, entlang deren sich ein Betätigungsmagnet (5) des Magnetsystems in derselben Montagerichtung (X) aufbringen läßt wie die bewegbaren Ventilkomponenten (4,7,8).

3. Magnetventil nach Anspruch 1 oder 2, **dadurch gekennzeichnet, dass** ein Teil der. inneren Führungsbahn (46) und die äußere Führungsbahn (50) im wesentlichen parallel zueinander verlaufend durch eine Polrohr (14) des ersten Gehäuseteils (2) gebildet sind.

4. Magnetventil nach einem der Ansprüche 1 bis 3, **dadurch gekennzeichnet, dass** die innere Führungsbahn (46), gebildet durch das erste Gehäuseteil (2), einen gestuften, zylindrischen Verlauf hat, die sich vom Ventilschließglied (7) ausgehend in Richtung des zweiten Gehäuseteils (9) im Bereich des Magnetankers (4) erweitert.

5. Magnetventil nach einem der Ansprüche 1 bis 4, **dadurch gekennzeichnet, dass** die innere Führungsbahn (46) im Bereich des Überganges von Magnetanker (4) zu dem zweiten Gehäuseteil (9) unter Bildung einer magnetischen Trennung eine Stufe (17) ausbildet.

6. Magnetventil nach Anspruch 4 oder 5, **dadurch gekennzeichnet, dass** die innere Führungsbahn (46) an Stellen der Stufenbildung einen Anschlag (44"') für das Ventilschließglied (7) sowie einen Anschlag (44") für den Magnetanker (4) ausbildet.

7. Magnetventil nach einem der Ansprüche 2 bis 5, **dadurch gekennzeichnet, dass** die äußere Führungsbahn (50) des ersten Gehäuseteils (2) von ihrem freien Aufschiebende weggerichtet durch stufenförmige Verbreiterung einen Anschlag (44') für den Betätigungsmagneten (5) ausbildet.

8. Magnetventil nach einem der Ansprüche 2 bis 7, **dadurch gekennzeichnet, dass** bei mit dem ersten Gehäuseteil (2) verbundenen zweiten Gehäuseteil (9) dessen Außendurchmesser eine gleichbleibende Verlängerung der äußeren Führungsbahn (50) des ersten Gehäuseteils (2) ausbildet.

9. Magnetventil nach einem der Ansprüche 1 bis 8, **dadurch gekennzeichnet, dass** das erste Gehäuseteil (2) entlang seiner inneren Führungsbahn (46) das eine freie stirnseitige Ende des zweiten Gehäuseteils (9) übergreift und dass das freie stirnseitige Ende des ersten Gehäuseteils (2) mittels einer Formschlußverbindung (13) mit dem zweiten Gehäuseteil (9) fest verbunden ist.

10. Magnetventil nach einem der Ansprüche 1 bis 9, **dadurch gekennzeichnet, dass** die innere und die äußere Führungsbahn (46,50) im Bereich der Festlegung des Magnetventils (1) an einem Drittbauteil von Fluidanschlüssen (29,30) durchgriffen sind, die mittels des Ventilschließgliedes (7) ansteuerbar sind.

## Claims

1. A solenoid valve for controlling a fluid having a magnet system that at least partially comprises a first housing part (2) that has an inwardly pointing guideway (46) along which at least all of the moveable valve components, such as a valve closing member (7), an armature (4) and an emergency actuation rod (8) can be inserted in sequence, one behind the other, into the first housing part (2) via its receiving opening (48) in a fitting direction (X), and that after insertion of the latter the receiving opening (48) of the first housing part (2) can be closed by a second housing part (9), **characterised in that** the valve closing member (7) is in the form of a stepped piston and is acted upon axially by means of a closing element with a tip (27) that is connected to the armature (4) in a clamping seat (24).

2. The solenoid valve according to Claim 1, **characterised in that** the first housing part (2) has an outwardly pointing further guideway (50) along which an actuation magnet (5) of the magnet system can be applied in the same fitting direction (X) as the moveable valve components (4, 7, 8).

3. The solenoid valve according to Claim 1 or 2, **characterised in that** part of the inner guideway (46) and the outer guideway (50) are formed running substantially parallel to one another through a pole tube (14) of the first housing part (2).

4. The solenoid valve according to any of Claims 1 to 3, **characterised in that** the inner guideway (46), formed by the first housing part (2), has a stepped, cylindrical extension which widens from the valve closing member (7) towards the second housing part (9) in the region of the armature (4).

5. The solenoid valve according to any of Claims 1 to 4, **characterised in that** the inner guideway (46) in the region of the cross-over from the armature (4) to the second housing part (9) forms a step (17) with the formation of a magnetic separation.

6. The solenoid valve according to Claim 4 or 5, **characterised in that** at points of the step formation the inner guideway (46) forms a stop (44"') for the valve closing member (7) and a stop (44") for the armature (4).

7. The solenoid valve according to any of Claims 2 to 5, **characterised in that** the outer guideway (50) of the first housing part (2) directed away from its free push-on end forms a stop (44') for the actuation magnet (5) by means of a step-like widening.

8. The solenoid valve according to any of Claims 2 to 7, **characterised in that** with the second housing part (9) connected to the first housing part (2) the outer diameter of the latter forms a uniform extension of the outer guideway (50) of the first housing part (2).

9. The solenoid valve according to any of Claims 1 to 8, **characterised in that** along its inner guideway (46) the first housing part (2) overlaps a free face-side end of the second housing part (9) and that the free face-side end of the first housing part (2) is connected to the second housing part (9) by means of a form closure connection (13).

10. The solenoid valve according to any of Claims 1 to 9, **characterised in that** in the region of the fixing of the solenoid valve (1) to a third component the inner and the outer guideway (46, 50) are passed through by fluid ports (29, 30) which can be controlled by means of the valve closing member (7).

## Revendications

1. Electrovanne pour se rendre maître d'un fluide ayant un système magnétique, qui comprend au moins partiellement une première partie (2) de corps, ayant une piste (46) de guidage qui est tournée vers l'intérieur et le long de laquelle au moins tous les éléments mobiles de la vanne, comme un obturateur (7), une armature (4), un poussoir (8) de non-actionnement peuvent être insérés dans une direction (X) de montage successivement dans la première partie (2) du corps par son ouverture (48) de réception et en ce qu'après leur insertion, l'ouverture (48) de réception de la première partie (2) du corps peut être fermée par une deuxième partie (9) du corps, **caractérisée en ce que** l'obturateur (7) de la vanne est constitué sous la forme d'un piston à palier et est soumise axialement à l'action d'un élément de fermeture à pointe (27) qui est relié à l'armature (4) de l'aimant suivant un ajustement (24) précis.

2. Electrovanne suivant la revendication 1, **caractérisée en ce que** la première partie (2) du corps a une piste (50) de guidage, qui est tournée vers l'extérieur et le long de laquelle un aimant (5) d'actionnement du système magnétique peut s'appliquer dans la même direction (X) de montage que les éléments (4, 7 et 8) mobiles de la vanne.

3. Electrovanne suivant l'une des revendications 1 ou 2, **caractérisée en ce qu'**une partie de la piste (46) intérieure de guidage et la piste (50) extérieure de guidage sont formées en s'étendant sensiblement parallèlement l'une à l'autre par un tube (14) polaire de la première partie (2) du corps.

4. Electrovanne suivant l'une des revendications 1 ou 3, **caractérisée en ce que** la piste (46) intérieure de guidage, formée par la première partie (2) du corps, a un tracé cylindrique étagé, qui s'élargit en partant de l'obturateur (7) de la vanne dans la direction de la deuxième partie (9) du corps dans la zone de l'armature (4) de l'aimant.

5. Electrovanne suivant l'une des revendications 1 ou 4, **caractérisée en ce que** la piste (46) intérieure de guidage forme, dans la zone de la transition de l'armature (4) de l'aimant à la deuxième partie (9) du corps, un palier (7) avec formation d'une séparation magnétique.

6. Electrovanne suivant l'une des revendications 4 ou 5, **caractérisée en ce que** la piste (46) intérieure de guidage forme, à l'endroit de la formation du palier, une butée (44"') pour l'obturateur (7) ainsi qu'une butée (44") pour l'armature (4) de l'aimant.

7. Electrovanne suivant l'une des revendications 2 ou 5, **caractérisée en ce que** la piste (50) extérieure de guidage de la première partie (2) du corps forme, en s'éloignant de son extrémité libre, une butée (44') pour l'aimant (5) d'actionnement par un élargissement en forme de palier.

8. Electrovanne suivant l'une des revendications 2 ou 7, **caractérisée en ce que** la diamètre extérieur de la deuxième partie (9) du corps, qui est reliée à la première partie (2) du corps, forme un prolongement restant constant de la piste (50) extérieure de guidage de la première partie (2) du corps.

9. Electrovanne suivant l'une des revendications 1 ou 8, **caractérisée en ce que** la première partie (2) du corps recouvre, le long de sa piste (46) intérieure de guidage, l'extrémité libre du côté frontal de la deuxième partie (9) du corps et **en ce que** l'extrémité libre du côté frontal de la première partie (2) du corps est reliée fixement à la deuxième partie (9) du corps par une liaison (13) à complémentarité de forme.

10. Electrovanne suivant l'une des revendications 1 ou 9, **caractérisée en ce que** la piste (46) intérieure de guidage et la piste (50) extérieure de guidage sont traversées, dans la zone de fixation de l'électrovanne (1) à un troisième élément constitutif, par des raccords (29,30) de fluide, qui peuvent être commandés au moyen de l'obturateur (7).
